# EUROPÄISCHE PATENTSCHRIFT

(11) **EP 1 181 148 B1**
(45) Veröffentlichungstag und Bekanntmachung des Hinweises auf die Patenterteilung: **12.11.2003**
(21) Anmeldenummer: 00941974.8
(22) Anmeldetag: 22.05.2000
(51) Int. Cl.: B29C 67/00, F01N 3/28, B28B 1/00, B28B 23/00

(54) **KERAMISCHER WABENKÖRPER MIT EINLAGERUNG**
CERAMIC HONEYCOMBED BODY WITH INLAY
CORPS ALVEOLAIRE CERAMIQUE A INSERT

(30) Priorität: 31.05.1999 DE 19924861
(43) Veröffentlichungstag der Anmeldung: 27.02.2002
(73) Patentinhaber: Emitec Gesellschaft für Emissionstechnologie mbH, 53797 Lohmar (DE)
(72) Erfinder: BRÜCK, Rolf, D-51429 Bergisch Gladbach (DE)
(74) Vertreter: Kahlhöfer, Hermann, Dipl.-Phys.
(86) Internationale Anmeldenummer: EP0004639
(87) Internationale Veröffentlichungsnummer: WO00073046

(56) Entgegenhaltungen:
- EP-A- 0 315 047
- EP-A- 0 590 957
- WO-A-91/01178
- DE-A- 4 213 261
- US-A- 4 293 513
- US-A- 5 482 659
- US-A- 5 514 347
- US-A- 5 585 073

## Beschreibung

Die vorliegende Erfindung betrifft ein Verfahren zur Herstellung eines Wabenkörpers mit Kanälen, wobei der Wabenkörper schichtweise aufgebaut wird, gemäß dem Oberbegriff des Patentanspruchs 1 sowie einen Wabenkörper mit für ein Fluid durchströmbaren Kanälen, die neben einander liegend angeordnet sind, wobei der Wabenkörper Wände hat, die Kanäle bilden und aus Keramik aufgebaut sind gemäß dem Oberbegriff des Patentanspruchs 3 und einen Wabenkörper gemäß dem Oberbegriff des Patentanspruchs 6.

Bekannt ist es, daß Wabenkörper aus Keramik mittels Extrusionsverfahren hergestellt werden, wobei die Form der Wabenkörper von der Maske abhängt, die bei der Herstellung eines Grünlings verwendet wird. Derartige keramische Wabenkörper weisen aufgrund des Herstellungsverfahrens regelmäßige Konturen der den Wabenkörper durchziehenden Kanalwände auf.

Zur Herstellung solcher keramischer Wabenkörper sind eine Mehrzahl unterschiedlicher Verfahren bekannt. So lehrt beispielsweise US 5,482,659 die Herstellung eines Wabenkörpers mittels der sogenannten Stereolithographie, wobei der Wabenkörper schichtweise aufgebaut wird, und die Schichten jeweils unter Einsatz eines UV-Lichts ausgehärtet wird. Das Auftragen einer neuen Schicht und das Aushärten wird dabei so oft wiederholt, bis die gewünschte Höhe der Wabenstruktur erreicht ist.

Aus der US 4,293,513 geht ein Verfahren zur Herstellung eines Wabenkörpers hervor, bei dem ein feuerfestes, anorganisches Material durch eine Matrize mit Öffnungen hindurchgedrückt wird, so dass eine dünne Schicht bzw. Platte entsteht. Diese Schichten bzw. Platten werden aufeinander aufgetragen und letztendlich gesintert.

Die DE 42 13 261 beschreibt ein Verfahren zur Herstellung eines Wabenkörpers aus elektrisch leitfähigem Material, welcher durch Schlitze und/oder elektrisch isolierte Schichten so unterteilt ist, dass ein elektrischer Strom auf einem gewundenen Pfad durch den Körper fließen kann, wobei der Körper aus Bereichen von unterschiedlichen Material mit unterschiedlichem spezifischen Widerstand besteht. Zur Herstellung wird vorgeschlagen, den Wabenkörper aus Metallpulver oder einer Mischung aus Metall- und Keramikpulver zu extrudieren.

Ein weiteres Verfahren zur Herstellung von Wabenkörpern geht aus der EP 0 590 957 A1 hervor. Dabei wird wiederum ein durch Licht aushärtbares Material schichtweise aufgetragen, wobei bezüglich einer Wabenstruktur Teile der Wände weggelassen werden.

Dabei ist nicht nur die Herstellung von Wabenkörpern mit durchgängigen, im wesentlichen parallel zueinander angeordneten Wänden bekannt, vielmehr gehen aus der DE 42 13 261, der US 5,585,073, der US 5,514,347, der EP 0 590 957 A1, der US 5,482,659 sowie der EP 0 351 047 A2 auch hervor, dass solche Kanalwände mit Öffnungen versehen sein können, die beispielsweise zur Durchmischung von einem solchen Wabenkörper durchströmenden Gasstrom zu gewährleisten. Die Ausbildung derartiger Öffnungen erfolgt zeitgleich mit der Generierung der Kanalwände beim Schichtverfahren oder durch nachträgliches Einbringen (Bohren, Trennen etc.).

Ein hiervon stark abweichendes Konzept zur Herstellung von Wabenkörpern geht aus dem Dokument WO 91/01178 hervor. Dort wird der Wabenkörper aus zumindest in Teilbereichen strukturierten Blechen gebildet, wobei die Bleche mit Öffnungen und Strömungsleitflächen versehen sind.

Aufgabe der vorliegenden Erfindung ist es, einen Wabenkörper und ein Verfahren zur Herstellung eines Wabenkörpers zu schaffen, mit dem der Einsatzbereich und die Verwendungsmöglichkeit eines Wabenkörpers, der Wände aus Keramik aufweist, vergrößert wird.

Diese Aufgabe wird mit einem Verfahren zur Herstellung eines Wabenkörpers mit den Merkmalen des Anspruchs 1, sowie mit einem Wabenkörper mit den Merkmalen des Anspruchs 3, sowie mit einem Wabenkörper mit den Merkmalen gemäß des Anspruches 6 gelöst. Vorteilhafte Weiterbildungen und Merkmale sind in den jeweils abhängigen Ansprüchen angegeben.

Das Verfahren zur Herstellung eines Wabenkörpers mit Kanälen sieht vor, daß der Wabenkörper schichtweise durch wiederholte Abfolge der Schritte:
- Erzeugen einer vorgebbaren Schicht mit einer ersten, plastisch verformbaren und anschließend verfestigbaren Masse und
- Verfestigung der Schicht aufgebaut wird, wobei Wände aufgebaut werden, die die für ein Fluid durchströmbaren Kanäle bilden.
Dabei wird eine Wand mit einer Struktur zur Beeinflussung der Strömung des Fluids versehen.

Eine vorteilhafte Weiterbildung des Verfahrens sieht vor, daß der schichtweise Aufbau zur Bildung einer Wand teilweise unterbrochen wird, um eine Öffnung in der Wand als Durchgang für das Fluid von einem ersten zu einem zweiten Kanal zu erzeugen.

Der Wabenkörper mit für ein Fluid durchströmbaren und neben einander liegend angeordneten Kanälen hat Wände, die die Kanäle bilden und aus Keramik aufgebaut sind, wobei eine Wand aus Keramik eine zusätzliche, in den Kanal hineinragende, Struktur hat, um eine Durchströmung des Fluids zu beeinflussen.

Die Struktur ist längs, quer und/oder schräg zu einer Durchströmungsrichtung des Fluids durch den Kanal angeordnet. Insbesondere kann die Struktur wellenförmig oder zick-zack-förmig sein.

Ein anderer Wabenkörper mit für ein Fluid durchströmbaren Kanälen, hergestellt aus einer plastisch verformbaren und anschließend verfestigbaren ersten Masse, wobei die erste Masse insbesondere schichtweise vorgebbar aufgetragen und verfestigt ist, hat entlang eines Schnittes durch den Wabenkörper neben der ersten Masse zumindest eine zweite Masse als eine Schicht entlang des Schnittes, wobei die erste Masse eine andere Eigenschaft aufweist als die zweite Masse.

Die Merkmale des Wabenkörpers können auch miteinander kombiniert werden, wobei vorteilhafterweise Strukturen so anordbar sind, daß sie Funktionen von Einlagerungen in den Wabenkörper unterstützen: sei es beispielsweise eine Temperaturmessung wie auch eine Beheizung des Fluids. Dementsprechend werden auch die jeweiligen verwendeten Massen für den Wabenkörper ausgesucht und angeordnet.

Ein möglicher Weg, einen Wabenkörper wie oben dargestellt, herzustellen, geht aus der folgenden Beschreibung hervor: ein Waberkörper mit Kanälen aus einer bildartig vorgebbaren Porenstruktur, hergestellt aus einer plastisch verformbaren und anschließend verfestigbaren ersten Masse, wobei die erste Masse schichtenweise vorgebbar aufgetragen und verfestigt ist, weist neben der ersten Masse zumindest eine zweite Masse auf, die eine vorgegebene Schicht im Wabenkörper bildet. Ein Verfahren zur Herstellung eines derartigen Wabenkörpers mit bildartig vorgebbarer Porenstruktur geht aus der EP 0 627 983 B1 hervor, deren diesbezüglichen Merkmale voll inhaltlich hiermit eingeschlossen werden. Die Nutzung einer zweiten Masse neben der ersten Masse hat den Vorteil, daß unterschiedliche Eigenschaften den jeweiligen Massen zugeordnet sein können. Das bedeutet für den Wabenkörper, daß er einteilig ist, abertrotzdem unterschiedliche Beteiche mit unterschiedlichen Eigenschaften haben kann.

Vorzugsweise ist die erste Masse elektrisch nicht leitend und die zweite Masse elektrisch leitend. Dadurch gelingt es, einen Wabenkörper herstellen zu können, der beispielsweise in gewissen Abschnitten seiner Bewandung eine Durchströmung mit elektrischem Strom zuläßt, während andere Bereiche der Bewandung dagegen kühl bleiben. Das erlaubt, daß der Wabenkörper auch in verschiedene Wirkungsbereiche aufgeteilt werden kann. Ein erster Abschnitt dient beispielsweise als ein Heizgerät, ein nachfolgender zweiter Abschnitt als Adsorber, ein dritter Abschnitt als Katalysator. Ebenso können diese nur exemplarisch aufgezählten Abschnitte untereinander vertauscht oder miteinander kombiniert werden.

Auch erlaubt die Verwendung von zumindest einer ersten und einer zweiten Masse, daß die zweite Masse zumindest teilweise in der ersten Masse eingebettet ist bzw. umgekehrt dieses der Fall sein kann. Bezogen auf eine mögliche elektrische Leitfähigkeit der zweiten Masse besteht damit die Möglichkeit, elektrische Leiterbahnen so im Wabenkörper verlaufen zu lassen, daß sie innerhalb einer Bewandung des Wabenkörpers verlaufen. Ein Kontakt dieser Leiterbahnen mit dem durchströmenden Fluid durch den Wabenkörper kann auf diese Weise vermieden werden. Andererseits gestattet die Verwendung einer geeigneten ersten bzw. zweiten Masse und die damit verbundene mögliche Einstellung einer gewünschten Porosität des Wabenkörpers an einer gewissen Stelle, daß das Fluid direkt auf die elektrische Leiterbahn stoßen kann. Beispielsweise kann auf diese Weise eine chemische Eigenschaft oder Zusammensetzung des durchströmenden Fluids getestet werden. Ebenso gestattet das Verfahren zur Herstellung, daß der Wabenkörper derart aufgebaut ist, daß eine Tragstruktur des Wabenkörpers aus der ersten Masse aufgebaut wird, wobei an den Rändern dieser Tragstruktur jeweils die zweite Masse als Schicht angeordnet wird, beispielsweise ein Katalysator- oder ein Adsorbermaterial.

Vorteilhaft ist auch, daß ein Körper in den Wabenkörper integriert wird. Während des schichtweisen Aufbaues kann dazu der Körper an den vorbestimmten Ort angelagert und bei weiterem schichtweisen Aufbau des Wabenkörpers von der verwendeten Masse eingebettet, wenn nicht sogar umschlossen werden. Dieses eignet sich besonders dafür, einen Meßfühler in den Wabenkörper zu integrieren. Entweder wird der Meßfühler vorgefertigt und bei der Herstellung des Wabenkörpers schichtweise umschlossen. Oder aber der Meßfühler wird ebenfalls schichtweise bei der Herstellung des Wabenkörpers mit aufgebaut, wobei entsprechende Massen verwendet werden, die letztendlich den Meßfühler ergeben. Neben einem Meßfühler ist auf diese Weise auch ein Heizdraht, eine Heizschicht oder ein anderer Körper insbesondere als Einlagerung in den Wabenkörper integrierbar.

Weiterhin ist es möglich, einen Wabenkörper mit Kanälen zu schaffen, der aus einer plastisch verformbaren und anschließend verfestigbaren ersten Masse hergestellt wird. Die erste Masse wird schichtenweise vorgebbar aufgetragen und anschließend verfestigt. Der Wabenkörper hat eine Hauptdurchströmungsrichtung entlang eines kürzesten Weges. Mehrere Schichten bilden nun eine vorgegebene Struktur an einem genau definierten Ort des Wabenkörpers, wobei die Struktur einen Strömungsweg in einem Kanal entlang der Hauptdurchströmungsrichtung gegenüber einem kürzesten Weg vorberechenbar verlängert. Durch die Verwendung des oben angeführten Verfahrens gelingt es, den exakten Wabenkörper vor seiner Herstellung genauestens strömungstechnisch entsprechend seinem Haupteinsatzgebiet durchrechnen zu können, damit verbundene Parameter einer strömungsoptimierten Auslegung zu unterwerfen, die einen möglichst weiten Bereich des Betriebsbereiches des Wabenkörpers abdeckt. Die gewünschte Verlängerung der Hauptdurchströmungsrichtung ist damit vorab so festlegbar, wie sie später im Wabenkörper selbst innerhalb der Kanäle am gewünschten Ort auch realisierbar ist. Insbesondere gelingt es dadurch, eine rechnerisch vorbestimmte, gewünschte Turbulenz im Wabenkörper selbst für den eingestellten Betriebspunkt zu erreichen.

Insbesondere kann in einer Weiterbildung eines Wabenkörpers die Struktur so angeordnet werden, daß sie eine gewünschte, insbesondere vorberechnete Turbulenz und/oder Diffusion in einem Kanal erzeugt. Weiterhin kann die Struktur eine Unterbrechung der Schichten aufweisen, was zu Hohlräumen oder Kanaldurchbrechungen führt. Auf diese Weise können Kanäle, die ansonsten gegeneinander im Wabenkörper geschlossen wären, im Wabenkörper an genau lokal definierten Orten miteinander verbunden werden, um dadurch. beispielsweise im Wabenkörper selbst einen für das durchströmende Fluid verlängerten Weg zu bilden. Im übrigen ist unter dem kürzesten Weg entlang einer Hauptdurchströmungsrichtung des Wabenkörpers der kürzeste Abstand zwischen einem Einlaß und einem Auslaß des Wabenkörpers zu verstehen. Dieser kann entlang einer Längsachse durch den Wabenkörper oder bei radialer Durchströmung entlang eines Radius' durch den Wabenkörper verlaufen. Im Inneren des Wabenkörpers können dann Strukturen und Strömungswinkel völlig frei vorbestimmbar und vorberechenbar angeordnet und aufgebaut werden.

In diesem Zusammenhang ist auch vorteilhaft, daß die Struktur und/oder der Kanal durch Einstellung einer Porosität der ersten Masse zumindest teilweise durchlässig ist. Dieses erlaubt, daß ein Fluid zumindest teilweise in die Struktur oder den Kanal eindringt bis zu einer gewissen Tiefe der ersten Masse. Erst dort, wo sich die Porosität so verdichtet, daß das Fluid aufgrund des hohen Durchströmungswiderstandes wieder abgelenkt wird, erfolgt eine Umleitung bzw. Weiterleitung entlang vorbestimmter Wege innerhalb des Wabenkörpers.

Weiterhin ist es vorteilhaft, daß eine vorgebbare Struktur in oder an einem Kanal an einem vorbestimmbaren Ort in einem Wabenkörper durch Aufbau mehrerer Schichten geschaffen wird, wobei die Struktur und der Ort vorab mittels einer Turbulenzberechnung definiert worden sind. Vorteilhafterweise wird in diese Turbulenzberechnung auch eine Berechnung der später notwendigen chemischen Umsetzungen, z. B. beim Einsatz des Wabenkörpers als Katalysator oder Adsorber, mit einbezogen. Insbesondere kann mit diesem Verfahren ein Wabenkörper geschaffen werden, wie er oben beschrieben worden ist.

Erläuternd sei hier noch ein Verfahren zur Herstellung eines Wabenkörpers mit Kanälen erwähnt, wobei der Wabenkörper schichtweise durch wiederholte Abfolge der Schritte:
- Erzeugen einer vorgebbaren Schicht mit einer ersten, plastisch verformbaren und anschließend verfestigbaren Masse und
- Verfestigung der Schicht aufgebaut wird.

Durch Auftragen einer zweiten elektrisch leitfähigen Masse und/oder Einlegen eines elektrisch leitfähigen Körpers in den Wabenkörper wird ein Meßfühler und/oder eine Heizung geschaffen.

Weiterhin wird ein Wabenkörper geschaffen, der für ein Fluid durchströmbare Kanäle hat, die neben einander liegend angeordnet sind, wobei der Wabenkörper Wände hat, die Kanäle bilden und aus Keramik aufgebaut sind. Der Wabenkörper Kann zumindest einen Meßfühler und/oder eine elektrisch leitfähige Masse in eine keramische Wand des Wabenkörpers integriert haben.

Vorteilhafterweise ist der Meßfühler und/oder die elektrisch leitfähige Masse in eine Wand des Wabenköpers integriert, die einen Kanal mitbildet. Zum einen können Temperaturen des durchströmenden Fluids aufgenommen werden, wenn der Meßfühler ein Temperaturfühler ist, zum anderen kann der Wabenkörper selbst als Heizgerät für das Fluid dienen. Zum Schutz des Meßfühlers und/oder der elektrisch leitfähigen Masse können diese vollständig von Keramik umgeben sein, so daß durch den Wabenkörper auch ein aggressives Fluid durchströmen kann, ohne daß etwaige gewollte Einlagerungen Beschädigungen wie beispielsweise aufgrund von Heißgaskorrosion oder anderen chemischen Reaktionen erleiden.

Weitere vorteilhafte Ausgestaltungen und Merkmale werden anhand der nachfolgenden Zeichnung näher erläutert. Zusätzliche Weiterbildungen ergeben sich durch geeignete Kombinationen der oben wie im folgenden offenbarten Merkmale bezuglich der Wabenkörper wie auch des Verfahrens untereinander. Dabei zeigen:
- Fig. 1: eine schematische Darstellung eines Herstellungsverfahrens für einen Wabenkörper,
- Fig. 2: eine Struktur, die beispielsweise als Längs- oder Querstruktur in einem Wabenkörper geschaffen werden kann,
- Fig. 3: eine weitere Struktur, die ebenfalls mit einem beanspruchten Verfahren herstellbar ist und
- Fig. 4: ein schichtweiser Aufbau des Wabenkörpers, in den ein Körper integriert ist.

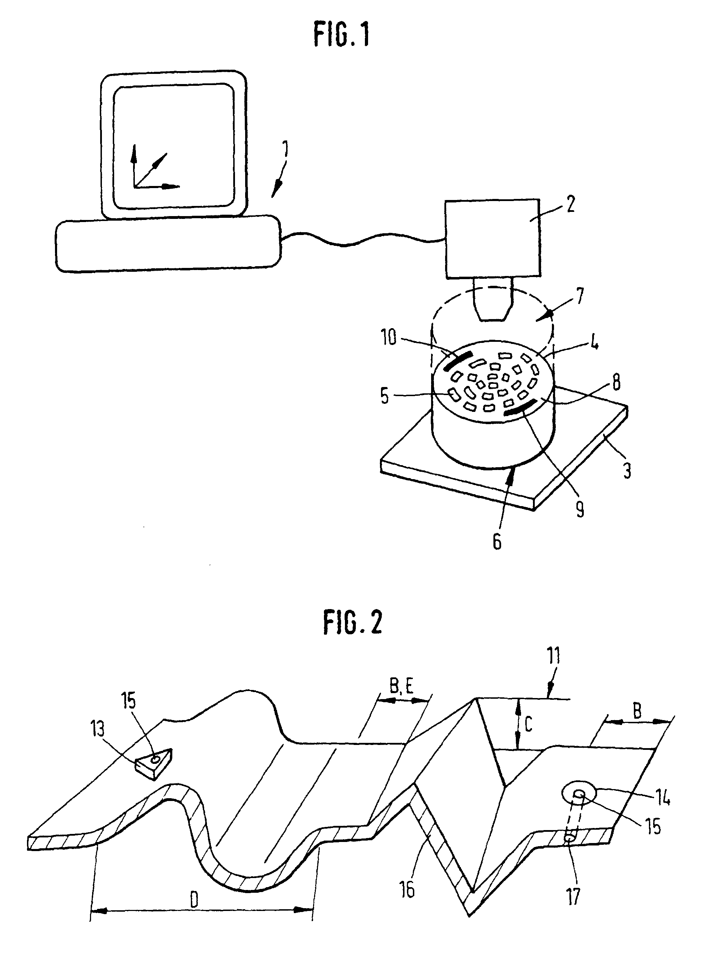

Fig. 1 zeigt eine schematische Ansicht eines Verfahrens zur Herstellung eines Wabenkörpers, wobei bezüglich des Verfahrens wie auch weiterer Merkmale, insbesondere verwendete Materialien und deren Eigenschaften, im Rahmen der Offenbarung auch auf die EP 0 627 983 B1 verwiesen wird. Auf einer Rechneranlage 1 können vor der Herstellung des Wabenkörpers alle notwendigen Berechnungen durchgeführt werden. Insbesondere Turbulenzrechnungen wie auch chemische Umsetzungerechnungen sowie Wärmeberechnungen und Stabilitätsberechnungen unter Berücksichtigung von Betriebsbereichen des Wabenkörpers erlauben, eine optimale Gestaltung des Wabenkörpers festlegen zu können. Die beispielsweise derart berechnete Konstruktion unter Ausnutzung von Strukturen wird dann in eine entsprechende, von einer geeigneten Fertigungsmaschine 2 zum Beispiel gleichzeitig über die Rechneranlage 1 umgesetzt. Entsprechend verfährt die Fertigungsmaschine 2 wie durch das angedeutete Koordinatensystem über einen Fertigungstisch 3. Dabei werden die vorberechneten Schichten und Strukturen gebildet und verfestigt. Auf dem Fertigungstisch 3 ist ein Wabenkörper 4 im Entstehungsprozeß angedeutet dargestellt. Entlang der Längsachse, punktliniert eingezeichnet, verlaufen Kanäle 5 durch den Wabenkörper 4. Eine erste Seite 6 des Wabenkörpers 4 definiert einen Eingang für ein später durchströmendes Fluid durch den Wabenkörper 4, während eine noch nicht fertiggestellte zweite Seite 7 einen entsprcchenden Ausgang für das Fluid definiert. In die Wände 8 des Wabenkörpers 4 sind ein erster 9 und ein zweiter 10 Körper eingelagert, die bei der weiteren Fertigstellung des Wabenkörpers in diesen integriert werden. So wie dargestellt, werden beide Körper 9, 10 während der Fertigung an den gewünschten Stellen eingelegt. Dieses ist auch in den innen liegenden Wänden 8 des Wabenkörpers 4 möglich. Neben dem Aufbau von Querschnittsscheiben ist bei entsprechender Verfestigung es ebenfalls möglich, den Wabenkörper 4 liegend aufzubauen, beispielsweise unter Zuhilfenahme einer entsprechenden Form, in der der Wabenkörper angefertigt wird. Diese Art der Fertigung bietet sich besonders dann an, wenn lange Körper in den Wabenkörper 4 eingelagert und integriert werden sollen.

Fig. 2 zeigt eine Kanalbewandung 11, die strukturiert ist. Neben geraden, glatten Abschnitten B sind Wellungen 12 vorhanden, deren Amplitude C bzw. Wellenlänge D je nach Erfordernis frei bestimmbar und herstellbar sind. Auch die Abstände zwischen den Wellungen, hier gekennzeichnet mit E, sind ohne Rücksicht zu nehmen auf ein Fertigungswerkzeug individuell an den Einsatzzweck des Wabenkörpers herstellbar. Die Kanalbewandung 11, deren Querschnitt hier dargestellt ist, kann diese Struktur als Längs- oder Quersstruktur zu der Hauptdurchströmungsrichtung aufweisen ebenso wie als Mischung zwischen einer reinen Quer- bzw. Längsstruktur. In Form einer ersten 13 und einer zweiten 14 Erhebung hat die Kanalbewandung neben der eigentlichen Struktur noch eine weitere Struktur, die zur Erzeugung von Turbulenz im Strömungsweg angeordnet wird. Die Gestalt der Struktur ist von ihrem jeweiligen Anwendungszweck abhängig frei gestaltbar. So können die erste und/oder zweite Erhebung 13, 14 einen Meßfühler 15 in ihrem Inneren aufweisen, der damit in den Fluidstrom hineinragt. Während an der ersten Erhebung 13 der Meßfühler 15 direkt Kontakt mit dem Fluidstrom hat, wird der Meßfühler 15 in der zweiten Erhebung 14 vollständig von Material der zweiten Erhebung 14 umgeben und damit gegen das durchströmende Fluid abgeschirmt. Zu erkennen ist weiterhin die Anordnung einer in einer ersten Masse 16 der Kanalbewandung 11 integrierten zweiten Masse 17, die elektrisch leitfähig ist und die Signale vom Meßfühler 15 durch den Wabenkörper 4 weiterleitet.

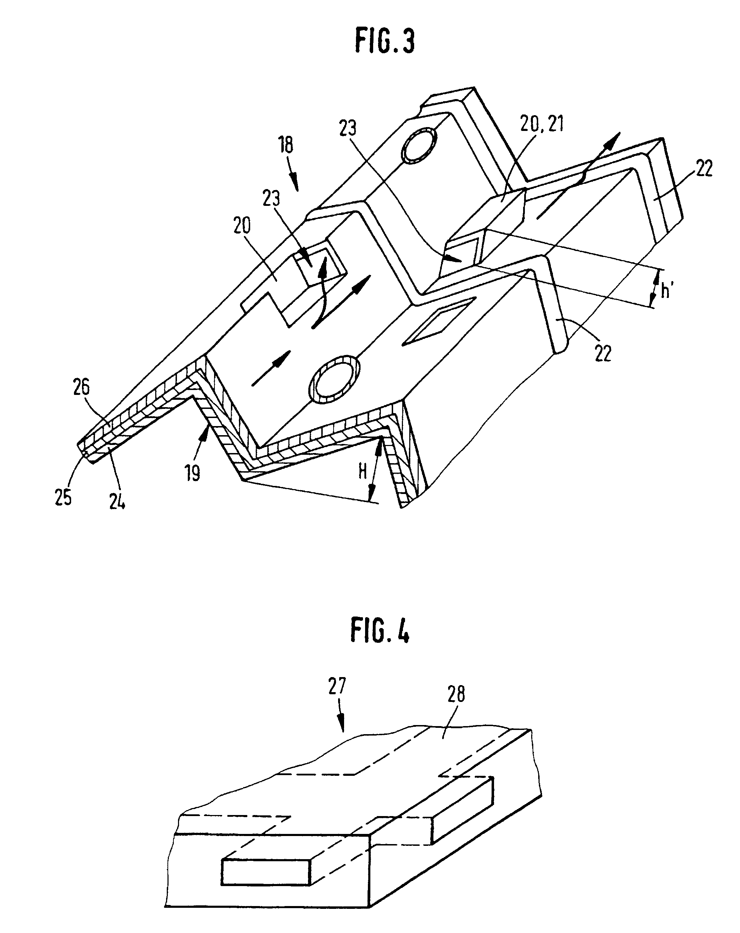

Fig. 3 zeigt eine zweite Kanalbewandung 18, die wiederum strukturiert ist. Eine erste Struktur 19 in der Form einer offenen Dreieckzackung weist Unterbrechungen der Schichten auf, aus welchen die zweite Kanalbewandung 19 aufgebaut ist. Das Verfahren der Verwendung einer plastisch verformbaren und anschließend verfestigbaren Masse erlaubt, in der ersten Struktur 19 eine weitere, zweite Struktur 20 als Mikrostruktur vorsehen zu können. Die zweite Struktur 20 ist beispielsweise als Ein- oder Ausstülpung in der ersten Struktur 19 angeordnet, als eine Längs- 21 wie auch als eine Transversalstruktur 22, wobei die Längsstruktur 21 eine Öffnung 23 hat, um als Durchgang von einem Kanal in einen benachbarten Kanal zu dienen. Insbesondere ermöglicht der schichtweise Aufbau der zweiten Kanalbewandung 18, daß eine erste Höhe H des offenen Dreiecks ebenso frei einstellbar ist entsprechend den Erfordemissen, wie eine zweite Höhe h der zweiten Struktur 20. Gleiches gilt auch für die jeweilige Dicke der Kanalbewandung 18, die in diesem Ausführungsbeispiel aus einer ersten 24, zweiten 25 und dritten 26 Schicht aufgebaut ist Die erste 24 und die dritte 26 Schicht sind aus einer ersten Masse hergestellt, während die zweite Schicht 25, die zwischen den anderen beiden eingebettet ist, aus einer zweiten Masse besteht, die elektrisch leitfähig ist. Dadurch gelingt es, die Kanalbewandung 18 vollständig zu erhitzen, um damit einen durchströmendes Fluid, angedeutet durch die Pfeile, aufzuheizen.

Bei der Ausbildung von Öffnungen und anderen in Richtung des Schichtaufbaus unterbrochenen Strukturen ist natürlich zu berücksichtigen, daß eine Schicht nicht ohne Unterlage aufgebaut werden kann. Es müssen daher entweder Hilfsstrukturen anstelle der späteren Öffnungen eingesetzt werden (z. B. aus Material, das später verbrannt oder weggeschmolzen wird) oder die Ränder der Öffnungen müssen schräg verlaufen, so daß ein schichtweiser Aufbau durch seitlich überstehende Schichten möglich ist.

Die Verfestigung der ersten und der zweiten Masse erlaubt, Geometrien und damit Strukturen frei formen zu können. Insbesondere kommen als Materialien für die erste bzw. zweite Masse keramische Rohstoffe wie auch metallische Rohstoffe in Frage, die auch miteinander verbindbar sind. Als keramische Rohstoffe sind beispielsweise Oxydkeramiken aber auch Metallkeramiken, während als metallische Rohstoffe Metallpulver, Metalloxide oder Metallösungen zu nennen, wie sich auch bisher schon für zu sintemde Wabenkörper einzeln bekannt gewesen sind. Nun aber können diese miteinander in jeweils einzelnen Schichten aufgebracht oder untereinander vermengt, miteinander verbunden werden. Ersteres geht beispielsweise auch aus der nachfolgenden Fig. 4 hervor.

Fig. 4 zeigt einen in eine dritte Kanalbewandung 27 integrierten dritten Körper 28. Die Integrierung des dritten Körpers 28 in die dritte Kanalbewandung 27 erfolgte, in dem zuerst eine erste Masse in Schichten aufgetragen und verfestigt wurde. Nachdem eine gewisse Schichthöhe erreicht wurde, wurde eine zweite Masse beim Aufbau der nachfolgenden Schichten mitverwendet. Nach Erreichen einer für den gewünschten Einsatz befriedigenden Höhe der zweiten Masse wurde für die weiteren Schichten wiederum allein die erste Masse verwendet. Auf diese Weise gelingt es, daß die zweite Masse vollkommen von der ersten Masse umschlossen und damit in ihr eingebettet und integriert ist. Die zweite Masse bildet hier ein Kreuz, wie es beispielsweise für einen Verteiler eines elektrischen Stroms innerhalb eines Wabenkörpers notwendig sein könnte. Durch entsprechende Verteilung der zweiten Masse bei der Herstellung des Wabenkörpers zum Aufbau von dessen Schichten sind verschiedenste Leiterbahnen oder ähnliches herstellbar. Es sind auch im derart schichtweise hergestellten Wabenkörper Hohlräume verwirklichbar, wobei aufgrund der Art des verwendeten Verfahrens Feinstkanäle zwischen 15 und 50 Mikrometer als Kanalstrukturen im Wabenkörper gebildet werden können. Insbesondere erlaubt das Verfahren, Einzelschichthöhen von etwa 1,5 bis 4 Mikrometer bis hin zu über 100 Mikrometer aufbauen können. Das wiederum bedeutet, daß eine Oberflächenbeschaffenheit des Wabenkörpers sowie der Strukturen der Kanäle selbst lokal genau definiert vorberechenbar und dann realisiert werden können. Auch sind auf diese Weise gewünschte Matcrialien genau an dem berechneten Ort in der vorgebbaren Dicke auftragbar.

Das Verfahren zur Herstellung des Wabenkörpers wie auch die Art des Wabenkörpers selbst ermöglichen, Einlagerungen sowie strömungsbeeinflussende Strukturen jeglicher Art insbesondere in vollständig aus Keramik aufgebauten Wabenkörpern zu verwirklichen. Ein derartiger Wabenkörper eignet sich beispielsweise für den Einsatz in Abgasleitungen, beispielsweise als Adsorber oder Katalysator, vorzugsweise bei Verbrennungskraftmaschinen von Kraftfahrzeugen.

### Bezugszeichenliste

- 1: Rechneranlage
- 2: Fertigungsmaschine
- 3: Fertigungstisch
- 4: Wabenkörper
- 5: Kanal
- 6: erste Seite
- 7: zweite Seite
- 8: Wand
- 9: erster Körper
- 10: zweiter Körper
- 11: Kanalbewandung
- 12: Wellung
- 13: erste Erhebung
- 14: zweite Erhebung
- 15: Meßfühler
- 16: erste Masse
- 17: zweite Masse
- 18: zweite Kanalbewandung
- 19: erste Struktur
- 20: zweite Struktur
- 21: Längsstruktur
- 22: Transversalstruktur
- 23: Öffnung
- 24: erste Schicht
- 25: zweite Schicht
- 26: dritte Schicht
- 27: dritte Kanalbewandung
- 28: dritter Körper

- B: Abschnitt
- C: Amplitude
- D: Wellenlänge
- E: Abstand der Wellung
- H: erste Höhe
- h: zweite Höhe

## Patentansprüche

1. Verfahren zur Herstellung eines Wabenkörpers (4) mit Kanälen (5), wobei der Wabenkörper (4) schichtweise durch wiederholte Abfolge der Schritte:
- Erzeugen einer vorgebbaren Schicht (24) mit einer plastisch verformbaren und anschließend verfestigbaren Masse und
- Verfestigung der Schicht (24),
aufgebaut wird, wobei Wände (8) aufgebaut werden, die die für ein Fluid durchströmbaren Kanäle (5) bilden,
**dadurch gekennzeichnet, daß**,
eine Wand (8) mit zumindest einer Struktur (19, 20, 21, 22) zur Beeinflussung der Strömung des Fluids versehen wird.

2. Verfahren nach Anspruch 1, **dadurch gekennzeichnet, daß** der schichtweise Aufbau zur Bildung einer Wand (8) teilweise unterbrochen wird, um eine Öffnung (23) in der Wand (8) als Durchgang für das Fluid von einem ersten zu einem zweiten Kanal (5) zu erzeugen.

3. Wabenkörper (4) mit für ein Fluid durchströmbaren und neben einander liegend angeordneten Kanälen (5), wobei der Wabenkörper (4) Wände (8) hat, die Kanäle (5) bilden und zumindest zum Teil aus Keramik aufgebaut sind, **dadurch gekennzeichnet, daß** zumindest eine Wand (8) aus Keramik im Wabenkörper (4) eine zusätzliche, in den Kanal (5) hineinragende, Struktur (19, 20, 21, 22) aulweist, um eine Durchströmung des Fluids zu beeinflussen.

4. Wabenkörper (4) nach Anspruch 3, **dadurch gekennzeichnet, daß** die Struktur (19,20,21,22) längs, quer und/oder schräg zu einer Durchströmungsrichtung des Fluids durch den Kanal (5) angeordnet ist.

5. Wabenkörper (4) nach Anspruch 3 oder 4, **dadurch gekennzeichnet, daß** die Struktur (19, 20, 21, 22) wellenförmig oder zick-zack-förmig ist.

6. Wabenkörper (4) mit für ein Fluid durchströmbaren Kanälen (5), hergestellt aus einer plastisch verformbaren und anschließend verfestigbaren ersten Masse, wobei die erste Masse insbesondere schichtweise vorgebbar aufgetragen und verfestigt ist, **dadurch gekennzeichnet, daß** entlang eines Schnittes durch den Wabenkörper (4) neben der ersten Masse zumindest eine zweite Masse eine Schicht entlang des Schnittes bildet, wobei die erste Masse eine andere Eigenschaft aufweist als die zweite Masse.

7. Wabenkörper (4) nach einem der vorhergehenden Ansprüche 3 bis 6, **dadurch gekennzeichnet, daß** eine Wand (8) von einem ersten Kanal (5) zu einem zweiten Kanal (5) hin eine Öffnung (23) als Durchgang für das durchströmbare Fluid hat.

8. Wabenkörper (4) nach einem der vorhergehenden Ansprüche 3 bis 7, **dadurch gekennzeichnet, daß** dieser vollständig aus Keramik ist.

## Claims

1. A method for producing a honeycomb body (4) with channels (5), wherein the honeycomb body (4) being composed in layers by the repeated sequence of the steps:
- generating a predeterminable layer (24) by means of a plastically deformable and subsequently consolidatable compound, and
- consolidating the layer (24),
wherein walls (8) being composed which form the channels (5) through which a fluid is capable of flowing,
**characterized in that**
one wall (8) is provided with at least one structure (19, 20, 21, 22) for influencing the flow of the fluid.

2. The method as claimed in claim 1, **characterized in that** the layered composition for forming a wall (8) is partially interrupted, in order to produce an orifice (23) in the wall (8) as a passage for the fluid from a first to a second channel (5).

3. A honeycomb body (4) with channels (5) through which a fluid is capable of flowing and which are arranged so as to lie next to one another, wherein the honeycomb body (4) has walls (8) which form channels (5) and are composed at least partially of ceramic, **characterized in that** at least one ceramic wall (8) in the honeycomb body (4) has an additional structure (19, 20, 21, 22) projecting into the channel (5), in order to influence a through-flow of the fluid.

4. The honeycomb body (4) according to claim 3, **characterized in that** the structure (19, 20, 21, 22) is arranged longitudinally, transversally and/or obliquely to a direction of through-flow of the fluid through the channel (5).

5. The honeycomb body (4) according to claim 3 or 4, **characterized in that** the structure (19, 20, 21, 22) is wavy- or zig-zag-shaped.

6. A honeycomb body (4) with channels (5) through which a fluid is capable of flowing, which honeycomb body is produced from a plastically deformable and subsequently consolidatable first compound, the first compound being, in particular in layers, predeterminable applied and consolidated, **characterized in that** along a section through the honeycomb body (4), next to the first compound, at least one second compound forms a layer along the section, the first compound having a property different from that of the second compound.

7. The honeycomb body (4) according to one of the preceding claims 3 to 6, **characterized in that** the wall (8) has an orifice (23) from a first channel (5) to a second channel (5) as a passage for the fluid capable of flowing through.

8. The honeycomb body (4) according to one of the preceding claims 3 to 7, **characterized in that** it is made completely of ceramic.

## Revendications

1. Procédé de fabrication d'un corps alvéolaire (4) avec des canaux (5), le corps alvéolaire (4) étant construit en couches par la succession répétée des étapes suivantes :
- génération d'une couche (24) pouvant être prédéterminée avec une masse déformable plastiquement et pouvant ensuite être consolidée et
- consolidation de la couche (24),
des parois (8) étant construites qui forment les canaux (5) pouvant être parcourus par un fluide, **caractérisé en ce qu'**une paroi (8) est dotée d'au moins une structure (19, 20, 21, 22) pour influencer l'écoulement du fluide.

2. Procédé selon la revendication 1, **caractérisé en ce que** la construction par couches pour la formation d'une paroi (8) est interrompue partiellement, afin de générer une ouverture (23) dans la paroi (8) en tant que passage pour le fluide d'un premier jusqu'à un deuxième canal (5).

3. Corps alvéolaire (4) avec des canaux (5) pouvant être parcourus par un fluide et étant agencés de manière adjacente, le corps alvéolaire (4) présentant des parois (8) qui forment des canaux (5) et qui sont au moins en partie construites en céramique, **caractérisé en ce qu'**au moins une paroi (8) en céramique dans le corps alvéolaire (4) présente une structure (19, 20, 21, 22) supplémentaire qui pénètre dans le canal (5), afin d'influencer un écoulement du fluide.

4. Corps alvéolaire (4) selon la revendication 3, **caractérisé en ce que** la structure (19, 20, 21, 22) est agencée de manière longitudinale, transversale et/ou oblique par rapport à un sens d'écoulement du fluide à travers le canal (5).

5. Corps alvéolaire (4) selon la revendication 3 ou 4, **caractérisé en ce que** la structure (19, 20, 21, 22) est ondulée ou en forme de zigzag.

6. Corps alvéolaire (4) avec des canaux (5) pouvant être parcourus par un fluide, fabriqué d'une première masse pouvant être déformée plastiquement et pouvant ensuite être consolidée, la première masse étant notamment rapportée en couches de manière à-pouvoir être prédéterminée et est solidifiée, **caractérisé en ce que** le long d'une section à travers le corps alvéolaire (4) au moins une deuxième masse forme à coté de la première masse une couche le long de la section, la première masse présentant une autre caractéristique que la deuxième masse.

7. Corps alvéolaire (4) selon l'une des revendications précédentes 3 à 6, **caractérisé en ce qu'**une paroi (8) a d'un premier canal (5) jusqu'à un deuxième canal (5) une ouverture (23) en tant que passage pour le fluide pouvant s'écouler.

8. Corps alvéolaire (4) selon l'une des revendications précédentes 3 à 7, **caractérisé en ce que** celui-ci est complètement en céramique.
